# EUROPEAN PATENT APPLICATION

(11) **EP 0 975 159 A2**
(43) Date of publication of application: **26.01.2000**
(21) Application number: 99305348.7
(22) Date of filing: 06.07.1999
(51) Int. Cl.: H04N 5/74

(54) **Projector lens apparatus**

(30) Priority: 07.07.1998 JP 19129998
(71) Applicant: SONY CORPORATION, Tokyo (JP)
(72) Inventor: Takenaka,Masanori, Shinagawa-ku, Tokyo (JP)
(74) Representative: Nicholls, Michael John

(57) **Abstract**

A projector lens apparatus includes an image display device; a projector lens system made of a plurality of lenses for projecting a display picture of the image display device; a lens barrel (2) in which the projector lens system (5) is disposed; and a coupler (4) for connecting the image display device (3) with the lens barrel. An inner pressure control diaphragm (26) for regulating an inner pressure of a liquid filled in the coupler is fixed by a pressing member integrally provided on at least one single lens constituting the projector lens system or the lens barrel.

## Description

The present invention relates to a projector lens apparatus, such as one for use in a projection television or the like, in which an assembling error of constituent parts at assembling is removed to improve optical accuracy so that a high quality projection image can be obtained.

In recent years, in a so-called projection television in which an image displayed by an image display device such as a cathode ray tube (CRT) is enlarged and projected onto a screen through a lens system (projector lens system) disposed in front of an image display surface of the image display device, the projector lens system and the image display device are connected with each other through a coupler, and a liquid having high transparency and a refractive index of about 1.43 is sealed in a space defined by the projector lens system, the image display device, and the coupler.

In this way, when the liquid is sealed between the projector lens system and the image display device, unnecessary reflected light produced at the interface between the image display device and the projector lens can be reduced to the utmost, and further, it becomes also possible to effectively perform radiation of heat from the image display device.

As described above, the system in which the projector lens system and the image display device are connected with each other through the coupler, and the liquid is sealed in the space formed by the projector lens system, the image display device, and the coupler, is generally called an optical coupling system, which greatly contributes to an improvement in the picture quality of a projection television.

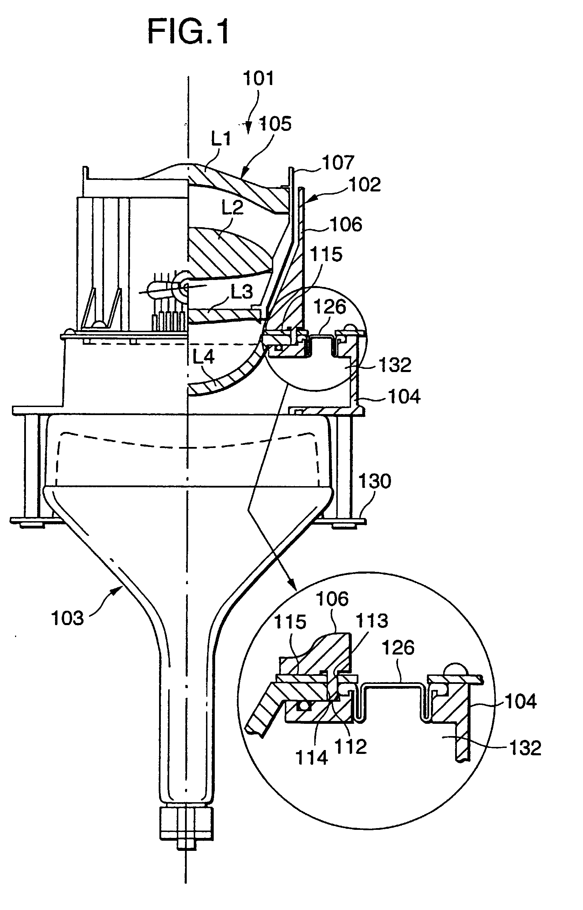

Figure 1 shows an example of a conventional projector lens apparatus 101 used for a projection television.

That is, the projector lens apparatus 101 includes a projector lens system 105 and one end of which is connected to a CRT 103. The projector lens system 105 is constituted by a plurality of single lenses L1, L2, L3 and L4 disposed in a lens barrel 102.

The lens barrel 102 has a double structure made of an outer lens barrel 106 and an inner lens barrel 107. The lenses L1 to L3 among the lenses L1 to L4 constituting the projector lens system except the lens L4 positioned nearest the CRT 103 are respectively fixed at predetermined positions in the inner lens barrel 107 which is rotatably and slidably disposed in the outer lens barrel 106. The lens L4 with a flange integrally formed on an outer circumferential portion is handled separately from the lenses L1 to L3, and is independently fixed to a coupler 104 connecting the lens barrel 102 with the CRT 103.

The CRT 103 and the lens L4 are fixed to both ends of the coupler 104 by using a CRT pressing plate 130 and a lens pressing plate 115, respectively. That is, seal rubbers are put between the lens L4 and the coupler 104 and between the CRT 103 and the coupler 104 respectively, and the lens pressing plate 115 and the CRT pressing plate 130 are screwed on the coupler 104, so that the lens L4 and the CRT 103 are connected to the coupler 104.

Then a liquid 132 is injected into the inside of the coupler 104, that is, a space between the lens L4 and the CRT 103 in a suitable method and is hermetically sealed. Incidentally, the volume of the liquid 132 is expanded by heat generated from the CRT 103 at the time of use of the projector lens apparatus 101, while the volume of the liquid 132 is contracted at the time of a stop of use of the projector lens apparatus 101, so that the inner pressure of the coupler 104 is changed. Thus, for the purpose of keeping the inner pressure of the coupler 104 constant, for example, an inner pressure control diaphragm 126 is disposed. An outer circumferential portion of the inner pressure control diaphragm 126 is held between the coupler 104 and the lens pressing plate 115 so that the diaphragm is fixed.

The lens barrel 102 is designed such that after the outer lens barrel 106 is fixed to the lens pressing plate 115 by screwing or the like, the inner lens barrel 107 is moved in the outer lens barrel 106, an air gap between the lens L3 and the lens L4 is adjusted to perform focusing adjustment of the projector lens system 105, and the positional relation between the outer lens barrel 106 and the inner lens barrel 107 is fixed.

In the projector lens system 105, it is necessary to make the optical axes of the lenses L1 to L3 suitably disposed in the inner lens barrel 107 coincide with the optical axis of the lens L4 fixed to the coupler 104 with high accuracy. Thus, in the projector lens apparatus 101, positioning pins 112, 112, ··· protruding rearward are provided at the rear end surface of the outer lens barrel 106, and further, positioning holes 113, 113, ··· corresponding to the positions of the positioning pins 112, 112, ··· are provided in the lens pressing plate 115. Then, it is designed such that at assembling to the coupler 104, the positioning pins 112, 112, ··· are inserted in the positioning holes 113, 113, ··· of the lens pressing plate 115, and the ends of the positioning pins 112, 112, ··· are made to come in contact with an outer circumferential surface 114 of the flange of the lens L4, so that the optical axes of the lenses L1 to L3 and the optical axis of the lens L4 are coincident with each other.

The foregoing projector lens apparatus 101 has such a structure that the lens L4 and the inner pressure control diaphragm 126 are fixed to the coupler 104 by using the lens pressing plate 115, and then, the lens barrel 102 in which the inner lens barrel 107 is placed in the outer lens barrel 106, is connected and fixed to the lens pressing plate 115, that is, the lens barrel 102 is indirectly connected and fixed to the coupler 104 through the lens pressing plate 115. Thus, there occur such problems that the number of parts of the projector lens apparatus 101 is increased by the existence of the lens pressing plate 115, and work efficiency at assembling is made worse.

Besides, in spite of the structure that the positioning pins 112, 112, ··· integrally formed to protrude from the outer lens barrel 106 come in contact with the outer circumferential surface 114 of the lens L4 so that the optical axes of the lenses L1 to L3 and the optical axis of the lens L4 are made coincident with each other, a shift in the respective optical axes often occurs due to fluctuation in working accuracy and molding accuracy of the outer shape of the lens L4 and the outer lens barrel 106, such as the position and size of the positioning pins 112, 112, ···, and the shape of the outer circumferential surface 114 of the lens L4, or fluctuation in assembling accuracy of the respective structural parts at assembling, and so on, which causes a problem of deterioration in picture quality of a projected image.

An object of the present invention is therefore to provide a projector lens apparatus in which the number of structural parts is reduced, so that work efficiency at assembling is improved, and assembling accuracy is improved so that a shift in an optical axis of each lens in a projector lens system is prevented from occurring, whereby a high quality projection image can be obtained.

In order to achieve the object, in the projector lens apparatus of the present invention, an inner pressure control diaphragm for controlling the inner pressure of a liquid filled in a coupler is fixed by a pressing member integrally provided on at least one single lens constituting a projector lens system or a lens barrel.

Thus, a lens pressing plate, its fixing screw, and the like which are conventionally required to fix an inner pressure control diaphragm and a single lens to a coupler become unnecessary, so that the number of structural parts of the projector lens apparatus can be reduced.

Embodiments of the invention will now be described by way of example only, with reference to the accompanying drawings, in which:
Figure 1 is a view showing a conventional projector lens apparatus in a state in which a part is cut away;
Figure 2 shows, together with Figure 3, a first embodiment of a projector lens apparatus of the present invention, and is a view showing the projector lens apparatus seen from below and a state in which a part is cut away;
Figure 3 is a front view of the embodiment of Figure 2;
Figure 4 shows, together with Figure 5, a second embodiment of a projector lens apparatus of the present invention, and is a view showing the projector lens apparatus seen from below and a state in which a part is cut away; and
Figure 5 is a front view of the embodiment of Figure 4.

Incidentally, in the following description, when a statement relative to front and rear directions is used, the side where a screen onto which an image is projected at use of a projector lens apparatus is positioned, is made the front, and the side where a cathode ray tube for displaying the image projected onto the screen is positioned, is made the rear.

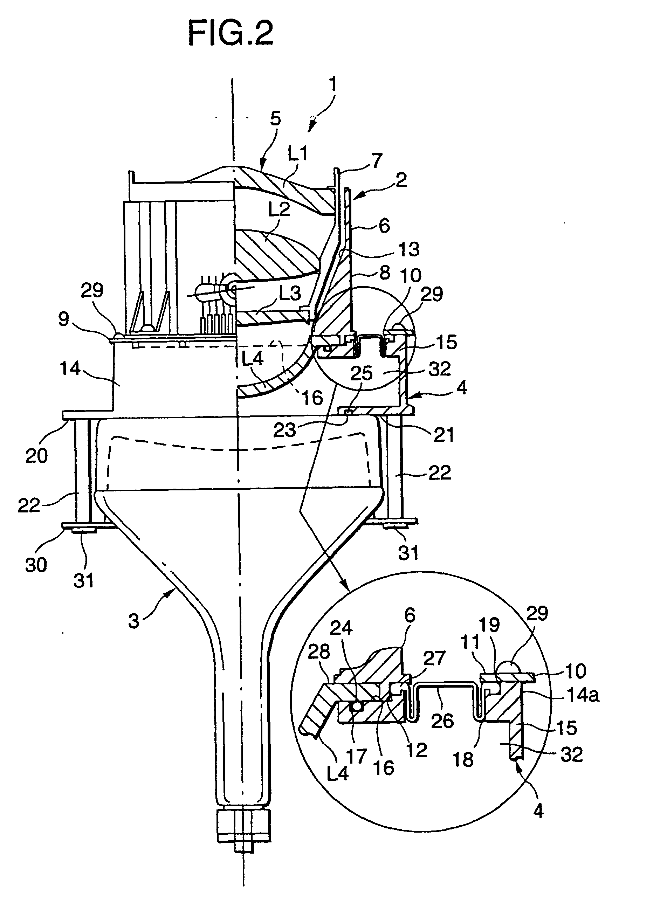

A projector lens apparatus 1 used as an image projector apparatus for a projection television includes, as shown in Figure 2, a substantially cylindrical lens barrel 2, a cathode ray tube (hereinafter referred to as "CRT") 3, a coupler 4 disposed between the lens barrel 2 and the CRT 3 for connecting them, a projector lens system 5, and the like.

The projector lens system 5 is constituted by a plurality of single lenses L1, L2, L3 and L4 each having a proper shape in the order from the front side of the projector lens apparatus 1, and is disposed in the inside of the lens barrel 2.

The lens barrel 2 is constituted by an outer lens barrel 6 and an inner lens barrel 7 rotatably and slidably disposed in the outer lens barrel 6.

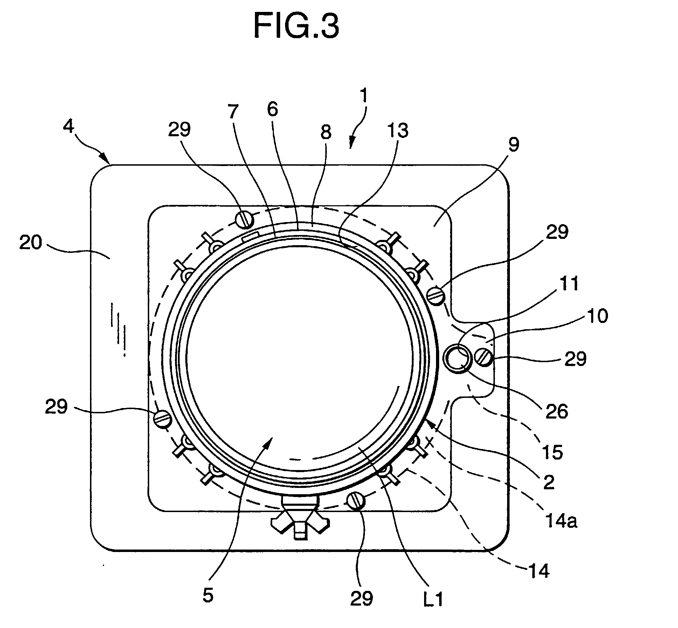

The outer lens barrel 6 includes, as shown in Figures 2 and 3, a cylindrical portion 8 with a substantially cylindrical shape, and a flange 9 is integrally formed to protrude outward from the outer circumferential surface of the rear end of the cylindrical portion 8. As described later, the flange 9 has a function to hold and fix the lens L4 and an inner pressure control diaphragm 26 against a coupler 4.

As described above, the flange 9 of the outer lens barrel 6 functions to connect the outer lens barrel 6 with the coupler 4, and further, is a part to function as a pressing plate for fixing the lens L4 and the like. As shown in Figure 3, an outer circumferential shape of the flange is substantially square. A fringe portion of the flange 9 is provided with an extended portion 10 which is a portion protruding outward from other portions and functions as a pressing member of the inner pressure control diaphragm 26. An attachment hole 11 for disposing the inner pressure control diaphragm 26 described later is provided in the extended portion 10. Positioning pins 12, 12, ··· protruding rearward are integrally formed at suitable places of the rear end surface of the outer lens barrel 6.

In the inside of the cylindrical portion 8 of the outer lens barrel 6, an inner surface 13 of the remaining rear portion of about two thirds of the cylindrical portion from a position of about one third from the front opening end toward the rear is formed into such a shape that an opening diameter at a portion becomes small as the portion moves to a rearward position, that is, a so-called taper shape.

Among the lenses L1, L2, L3, and L4 constituting the projector lens system 5, the lenses L1, L2 and L3 are disposed at predetermined positions in the inside of the inner lens barrel 7 respectively. The lens L4 positioned nearest the CRT 3 will be described later.

As shown in Figure 2, in the inner lens barrel 7, a portion of about one third of the inner lens barrel at the front side is cylindrical, and the remaining portion of two thirds of the inner lens barrel at the rear side has such a shape that an opening diameter and an outer diameter at a portion become gradually small as the portion moves to a rearward position. The inner lens barrel 7 including the lenses L1 to L3 is fitted in the cylindrical portion 8 of the outer lens barrel 6.

The coupler 4 includes a main portion 14 which has opening portions at both rear and front ends, is short in the rear and front direction, and has a substantially cylindrical shape. A part of a peripheral wall 14a of the main portion 14 is provided with an extended portion 15 protruding toward the side, which corresponds to the shape of the extended portion 10 of the outer lens barrel 6 and the attachment hole 11.

A lens installation portion 16 engaging with the lens L4 is formed at the inner side of the front end of the main portion 14, and an annular groove 17 is formed in the lens installation portion 16 along an opening fringe. A circular insertion hole 18 is provided at a portion of the front end of the main portion 14 corresponding to the extended portion 15, and an annular groove 19 is formed along its opening fringe.

A rear end portion of the main portion 14 of the coupler 4 is provided with a flange 20 which integrally protrudes outward from the peripheral wall 14a and has a substantially square peripheral shape seen from the front, and is further provided with an inner flange 21 integrally protruding inward. A plurality of boss portions 22, 22, ··· are formed to protrude rearward at the rear end portion of the main portion 14.

A groove 23 is formed along an opening fringe of the inner flange 21 of the rear end portion of the main portion 14, similarly to the front end portion 16.

As shown in Figure 2, substantially ring-shaped seal rubbers 24 and 25 are fitted in the grooves 17 and 23, respectively. Further, an inner pressure control diaphragm 26 is fitted in the insertion hole 18, and an outer fringe portion 27 having a function of seal rubber is positioned in the groove 19.

The shape of the lens L4 is such that a flange 28 is integrally formed at an outer circumferential portion of a substantially semispherical dome-shaped portion, and as shown in Figure 2, the flange 28 is held between the outer lens barrel 6 and the coupler 4.

The projector lens apparatus 1 is assembled in a manner as described below. That is, as shown in Figure 2, the lens L4 is mounted on the coupler 4 so that the flange 28 is positioned at the lens installation portion 16 of the coupler 4, and the outer lens barrel 6 is further mounted thereon. The flange 9 is screwed by using the screws 29, 29, ··· so that the outer lens barrel 6 is fixed to the coupler 4. Then the outer fringe portion 27 of the inner pressure control diaphragm 26 is held between the flange 9 and the coupler 4. Besides, the position of the lens L4 is regulated by the positioning pins 12, 12, ··· of the outer lens barrel 6, and the lens L4 is held and fixed between the coupler 4 and the outer lens barrel 6, while the seal rubber 24 is put against the coupler 4. At the same time, the coupler 4 and the outer lens barrel 6 are connected with each other.

The CRT 3 is connected to the rear end of the coupler 4 by using a CRT pressing plate 30 of a frame shape with an opening at its center. That is, the rear end of the coupler 4 is brought into close contact with an image display surface of the CRT 3 through a seal rubber 25, and the CRT 3 is inserted into the opening of the CRT pressing plate 30 from the rear side, so that such a state is formed that the front portion of the CRT 3 is held between the coupler 4 and the CRT pressing plate 30, and the CRT pressing plate 30 and the boss portions 22, 22, ··· of the coupler 4 are fixed by using screws 31, 31, ···.

Then the openings of the coupler 4 at the front end side and the rear end side are closed by the lens L4, the outer lens barrel 6, and the CRT 3, so that a space is formed in the inside. The inside space becomes a hermetically sealed state by the seal rubbers 24 and 25 put between the coupler 4 and the lens L4 and between the coupler 4 and the CRT 3 respectively, and the inner pressure control diaphragm 26 fitted in the insertion hole 18 and having the outer fringe portion 27 held between the rear end surface of the outer lens barrel 6 and the coupler 4.

When a liquid 32 with high transparency and a refractive index of about 1.43 is filled in the hermetically sealed inner space of the coupler 4 in a suitable method, the space between the surface of the lens L4 and the surface of the CRT 3 is filled with the liquid 32, so that the coupler 4 comes to function as a so-called optical coupling.

Finally, the inner lens barrel 7 is put in the cylindrical portion 8 of the outer lens barrel 6, and an air gap between the lens L3 and the lens L4 is adjusted, so that focus adjustment of the projector lens system 5 is performed, and then, the positional relation between the outer lens barrel 6 and the inner lens barrel 7 is fixed.

As described above, in the projector lens apparatus 1, a lens pressing plate conventionally used for only fixing the lens L4 and the inner pressure control diaphragm 26 to the coupler 4 is disused by causing the flange 9 provided at the rear end of the outer lens barrel 6 to have the function of the lens pressing plate. Thus, the number of parts can be reduced, material costs can be reduced, assembling steps can be simplified, and production efficiency can be improved.

Further, by the reduction of the number of parts constituting the projector lens apparatus 1, it becomes possible to reduce the synergistic effect of fluctuation in molding accuracy, working accuracy, or assembling accuracy of each part, and the quality of a projected image can also be improved.

It is also possible to cause a portion other than the flange 9 of the outer lens barrel 6 to have the function of the lens pressing plate to fix the lens L4 and the inner pressure control diaphragm 26 to the coupler 4.

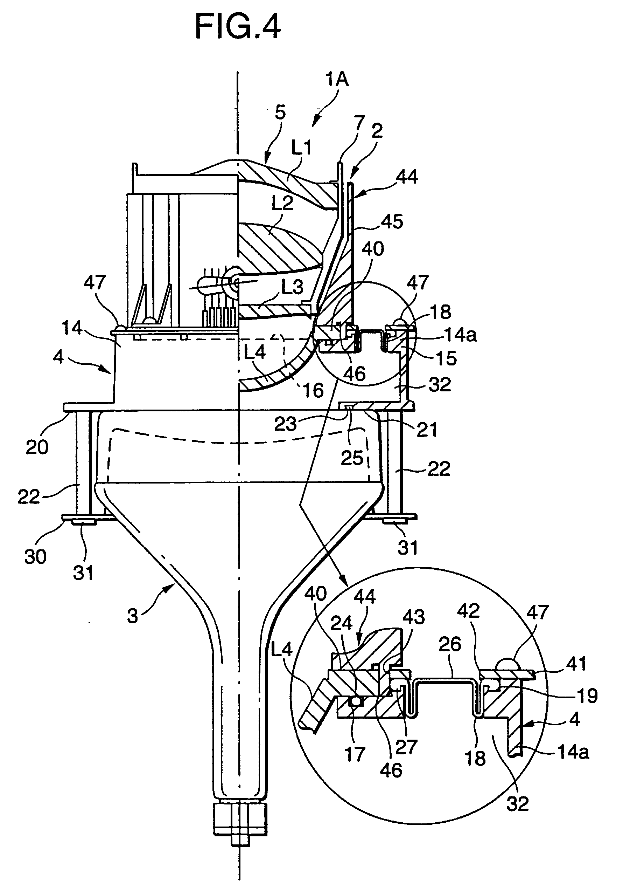

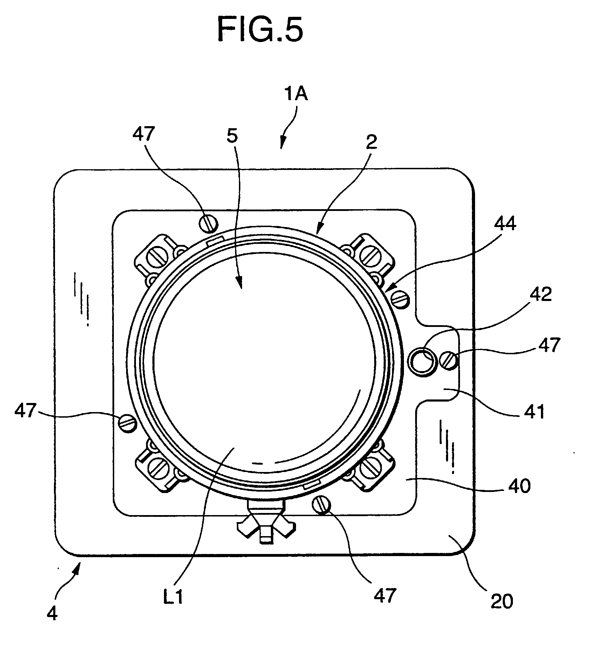

Figures 4 and 5 show a second embodiment of a projector lens apparatus of the present invention. In a projector lens apparatus 1A, for example, the shape of a lens L4 is made similar to the flange 9 of the outer lens barrel 6 in the foregoing embodiment, so that this portion is made to have a function to fix the lens L4 and the inner pressure control diaphragm 26.

In the following description, portions similar to those explained in the foregoing embodiment are denoted by the same reference characters, and their explanation will be omitted.

The outer circumferential shape of a flange 40 of the lens L4 is substantially square. A place of a fringe portion of the flange 40 is provided with an extended portion 41 which protrudes outward from other portions, is made slightly thin, and functions as a pressing member of the inner pressure control diaphragm 26. An attachment hole 42 for disposing the inner pressure control diaphragm 26 is provided in the extended portion 41. Positioning holes 43, 43, ··· are provided at suitable places of the flange 40.

An outside lens barrel 44 of the lens barrel 2 includes a cylindrical portion 45 with a substantially cylindrical shape, and positioning pins 46, 46, ··· protruding rearward are integrally formed at suitable places of the rear end surface of the outer lens barrel 44.

The projector lens apparatus 1A is assembled in a manner as described below.

That is, as shown in Figure 4, the lens L4 is mounted on the coupler 4 so that the flange 40 is positioned at the lens installation portion 16 of the coupler 4. When the flange 40 of the lens L4 is screwed on the coupler 4 by using screws 47, 47, ···, the lens L4 is fixed to the coupler 4 through the seal rubber 24, and the outer fringe portion 27 of the inner pressure control diaphragm 26 which is disposed in the insertion hole 18 of the coupler 4, is held between the extended portion 41 and the coupler 4. The connecting method of the coupler 4 and the CRT 3 is quite the same as the method in the first embodiment.

The front and rear openings of the coupler 4 are closed by the lens L4 and the CRT 3 respectively, so that a space is formed in the inside. The inside space becomes a hermetically sealed state by the seal rubbers 24 and 25 put between the coupler 4 and the lens L4 and between the coupler 4 and the CRT 3, and the inner pressure control diaphragm 26 fitted in the insertion hole 18 and having the outer fringe portion 27 held between the extended portion 41 of the lens L4 and the coupler 4.

When a liquid 32 with high transparency and a refractive index of about 1.43 is filled in the hermetically sealed inner space of the coupler 4 in a suitable method, the space between the surface of the lens L4 and the surface of the CRT 3 is filled with the liquid 32, so that the coupler 4 comes to function as a so-called optical coupling.

The positioning pins 46, 46, ··· are inserted in the positioning holes 43, 43, ··· of the lens L4 to make positioning, and as shown in Figure 5, the outer lens barrel 44 is fixed onto the flange 40 by suitable means such as screwing.

Finally, the inner lens barrel 7 is inserted in the cylindrical portion 8 of the outer lens barrel 44, and an air gap between the lens L3 and the lens L4 is adjusted, so that focus adjustment of the projector lens system 5 is performed, and then, the positional relation between the outer lens barrel 44 and the inner lens barrel 7 is fixed.

As described above, in the projector lens apparatus 1A, a lens pressing plate conventionally used for only fixing the lens L4 and the inner pressure control diaphragm 26 to the coupler 4 is disused by causing the flange 40 of the lens L4 to have the function of the lens pressing plate. Thus, the number of parts can be reduced, material costs can be reduced, assembling steps can be simplified, and production efficiency can be improved.

Further, by the reduction of the number of parts constituting the projector lens apparatus 1A, it becomes possible to reduce the synergistic effect of fluctuation in molding accuracy, working accuracy, or assembling accuracy of each part, and the quality of a projected image can also be improved.

Incidentally, the specific shape and structure of each portion shown in the respective embodiments are merely examples of embodying the present invention, and the technical scope of the present invention should not be restrictively interpreted with these.

As is apparent from the above, in the projector lens apparatus of the present invention, the inner pressure control diaphragm for controlling the inner pressure of a liquid filled in the coupler is fixed by the pressing plate provided on at least one single lens constituting the projector lens system or the lens barrel. Thus, a lens pressing plate, its fixing screw, and the like which are conventionally required to fix the inner pressure control diaphragm and the single lens to the coupler become unnecessary, so that the number of structural parts of the projector lens apparatus can be reduced. Accordingly, the cost can be reduced by reduction of material costs, the picture quality can be improved by lowering of the synergistic effect of fluctuation in molding accuracy, working accuracy, and assembling accuracy, and production efficiency can be improved by simplification of assembling steps.

Moreover, according to the present invention, at least one single lens constituting the projector lens system is directly fixed to the coupler, and the inner pressure control diaphragm is fixed by the pressing member integrally formed with the lens. Thus, the inner pressure control diaphragm can be fixed at the same time as fixing of the lens to the coupler, and the number of structural parts of the projector lens apparatus can be reduced. Thus, the cost can be reduced by reduction of material costs, the picture quality can be improved by lowering of synergistic effect of fluctuation in molding accuracy, working accuracy, and assembling accuracy, and production efficiency can be improved by simplification of assembling steps.

## Claims

1. A projector lens apparatus, comprising:
a projector lens system made of a plurality of lenses for projecting a display picture of an image display device;
a lens barrel in which said projector lens system is disposed; and
a coupler for connecting said image display device with said lens barrel;
wherein an inner pressure control diaphragm for regulating an inner pressure of a liquid filled in said coupler is fixed by a pressing member integrally provided on said lens barrel.

2. A projector lens apparatus according to claim 1, wherein said lens barrel includes an outer lens barrel and an inner lens barrel rotatably and slidably disposed in said outer lens barrel, and
wherein said outer lens barrel includes a flange protruding outward, and at least one lens constituting said projector lens system and said inner pressure control diaphragm are held and fixed between said flange and said coupler.

3. A projector lens apparatus according to claim 2, wherein an attachment hole for disposing said inner pressure control diaphragm is provided in said flange of said outer lens barrel.

4. A projector lens apparatus according to claim 3, wherein a plurality of protruding positioning pins for determining an outer circumferential position of at least one lens of said projector lens system are provided at said flange of said outer lens barrel.

5. A projector lens apparatus, comprising:
a projector lens system made of a plurality of lenses for projecting a display picture of an image display device;
a lens barrel in which said projector lens system is disposed; and
a coupler for connecting said image display device with said lens barrel;
wherein an inner pressure control diaphragm for regulating an inner pressure of a liquid filled in said coupler is fixed by a pressing member integrally provided on at least one single lens constituting said projector lens system.

6. A projector lens apparatus according to claim 5, wherein said single lens includes a flange portion with a substantially square outer circumferential shape; and
wherein said flange portion includes a protrusion which protrudes outward and is of reduced thickness, and said protrusion presses on said inner pressure control diaphragm.

7. A projector lens apparatus according to claim 6, wherein an attachment hole for disposing said inner pressure control diaphragm is provided in said protrusion of said flange portion.

8. A projector lens apparatus according to claim 6 or 7, wherein said lens barrel includes an outer lens barrel and an inner lens barrel rotatably and slidably disposed in said outer lens barrel;
wherein a plurality of positioning pins are provided at an end surface of said outer lens barrel at an image source side; and
wherein a plurality of positioning holes are provided in said flange portion correspondingly to said positioning pins.

9. An apparatus according to any one of the preceding claims, further comprising said image display device.

10. An apparatus according to claim 9, wherein said image display device is a cathode ray tube.

11. A projection television comprising an apparatus according to any one of the preceding claims.
